# Europäisches Patentamt

## European Patent Office

## Office européen des brevets

(11) Veröffentlichungsnummer: **0 315 099 B1**

(12) # EUROPÄISCHE PATENTSCHRIFT

(45) Veröffentlichungstag der Patentschrift: **29.01.92**

(21) Anmeldenummer: **88118097.0**

(22) Anmeldetag: **31.10.88**

Die Akte enthält technische Angaben, die nach dem Eingang der Anmeldung eingereicht wurden und die nicht in dieser Patentschrift enthalten sind.

(51) Int. Cl.⁵: **G01N 23/18**, G01M 17/02

(54) **Vorrichtung zur allseitigen Röntgenprüfung eines drehbar abgestützten Kraftfahrzeugreifens während einer Reifenumdrehung.**

(30) Priorität: **02.11.87 DE 3737159**

(43) Veröffentlichungstag der Anmeldung:
**10.05.89 Patentblatt 89/19**

(45) Bekanntmachung des Hinweises auf die Patenterteilung:
**29.01.92 Patentblatt 92/05**

(84) Benannte Vertragsstaaten:
**AT BE CH DE ES FR GB GR IT LI LU NL SE**

(56) Entgegenhaltungen:
**EP-A- 0 216 705      DE-A- 2 262 982**
**DE-A- 3 113 440      DE-B- 2 231 792**
**DE-U- 8 715 213      US-A- 3 934 144**

**ELECTRONIOUE INDUSTRIELLE, Nr. 66, 1. März 1984, Seiten 19-20; H. ROUGEOT: "Les détecteurs X sensibles à l'état solide pour le contrôle non destructif"**

**ELEKTRONIK 17 vom 22.08.86, Seiten 62-66**

(73) Patentinhaber: **Spezialmaschinenbau Steffel GmbH & Co. KG**
**Robert-Bosch-Strasse 1-3**
**W-2418 Ratzeburg(DE)**

(72) Erfinder: **Steffel, Horst**
**Am Fürstenhof 9**
**WE-2401 Gross Grönau(DE)**

(74) Vertreter: **Dipl.-Ing. H. Hauck Dipl.-Ing. E. Graalfs Dipl.-Ing. W. Wehnert Dr.-Ing. W. Döring**
**Neuer Wall 41**
**W-2000 Hamburg 36(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung bezieht sich auf eine Vorrichtung zur allseitigen Röntgenprüfung eines drehbar abgestützten Kraftfahrzeugreifens während einer Reifenumdrehung nach dem Oberbegriff des Patentanspruchs 1.

Aus der DE-PS 22 39 003 ist eine Röntgenprüfvorrichtung bekanntgeworden, bei der eine Röntgenröhre in der Mittenebene des Reifens eingebracht ist und die Reifenlauffläche durchleuchtet. Zwei weitere Röntgenröhren sind außerhalb des Reifens in Arbeitsstellung symmetrisch zur Reifenmittelebene so ausgerichtet, daß alle Röntgenröhren mit ihren Brennpunkten in einer gemeinsamen Ebene liegen, die senkrecht zur Reifenmittelebene verläuft und mit der optischen Achse der ersten Röntgenröhre zusammenfällt. Den Reifenseitenwänden und der Lauffläche sind außen angebrachte Leuchtschirme zugeordnet, wobei die den Reifenseitenwänden zugeordneten Leuchtschirme über ein Spiegelsystem auf eine Röntgenkamera strahlen, während eine weitere Kamera dem der Lauffläche zugeordneten Leuchtschirm zugeordnet ist. Die Kameras sind mit Monitoren verbunden, damit eine Bedienungsperson bei einer Drehung des Reifens mögliche Fehler sofort erkennen kann.

Bei der bekannten Vorrichtung läßt sich eine Doppeldurchstrahlung von Reifenteilen nur vermeiden, wenn die außen liegenden Röntgenröhren unter sehr spitzem Winkel in den Reifen hineinstrahlen. Eine derartige Schrägdurchstrahlung erschwert die Fehlererkennung in unzulässiger Weise. Soll dieser Nachteil vermieden werden, lassen sich Doppeldurchstrahlungen beider Flanken bzw. eines Flankenabschnitts und eines Wulstes nicht verhindern. Bei einer Abbildung des oberen Wulstes muß dieser durch die unten liegende Flanke (von der Röntgenröhre aus betrachtet) projiziert werden; umgekehrt muß bei Abbildung der unteren Fläche die Strahlung durch den oberen Wulst hindurchtreten. Die dabei entstehenden Schatten machen eine einwandfreie Fehlererkennung, schwierig, bei Verwendung von Kunststoffcord nahezu unmöglich. Die Doppelbilder haben einen unterschiedlichen Maßstab und bewegen sich zudem mit unterschiedlicher Geschwindigkeit auf dem Bildschirm. Ein besonderes Problem kommt bei der Prüfung von mit Kunststoffcord versehenen Reifen hinzu. Der Grund liegt in dem geringen Kontrast, der zwischen Gummi einerseits und Kunststoff andererseits herstellbar ist. Ein ausreichender Kontrast läßt sich nur erreichen, wenn die Strahlungsenergie nicht zu groß ist. Die beschriebene Vorrichtung weist zwangsläufig große Abstände zwischen den Röntgenröhren und den Leuchtschirmen auf. Die Röhren müssen daher für eine große Leistung ausgelegt sein; bekanntlich schwächt sich die Strahlung mit dem Quadrat der Entfernung von der Quelle ab. Die beschriebene Doppeldurchstrahlung bewirkt nochmals eine Leistungsminderung um 100 Prozent. Ferner wird durch die Durchstrahlung einer Reifenwand, die notwendig ist, um die andere Wand zu prüfen, eine Streustrahlung erzeugt, die die Fehlererkennung weiter erschwert.

Werden Bildschirme oder ähnliche Empfangsvorrichtungen verwendet, ist die gesamte Vorrichtung im wesentlichen starr anzuordnen. Eine Durchstrahlung der Flanken annähernd im Winkel von 90° erfordert eine Doppeldurchstrahlung der Flanken. Andernfalls muß ein relativ spitzer Durchstrahlungswinkel in Kauf genommen werden. Beide Abbildungsmaßnahmen lassen eine einwandfreie Betrachtung der Reifenstruktur nur begrenzt zu. Es kommt zu Verzerrungen bzw. Überlagerung von abgebildeten Bereichen, die das Erkennen von Fehlern erschweren. Eine starre Anordnung hat auch den Nachteil, daß jede Reifengröße in einem anderen Maßstab abgebildet wird. Die Bedienungsperson muß daher bei jedem Maßstab eine Transponierung vornehmen, um eine einwandfreie Fehlererkennung bzw. Fehlerzuordnung durchführen zu können. An die Bedienungsperson werden daher hohe Anforderungen gestellt.

Aus der DE-AS 22 62 982 ist auch ein Reifenprüfgerät bekanntgeworden, bei dem eine sogenannte Röntgenrundstrahlröhre verwendet wird, die in einer Ebene einen Strahlungswinkel von mehr als 180° aufweist und in einer Ebene senkrecht dazu einen Strahlungswinkel von 20 bis 40°. Der Lauffläche sowie den Flanken sind Bildaufnahmeeinheiten zugeordnet, welche von Röntgenbildverstärkern, einem Fluoreszenzschirm mit angeschlossener Fernsehkamera oder von einer röntgenstrahlempfindlichen Fernsehkamera gebildet sind. Die Ausgangssignale werden auf ein Bildwiedergabegerät, zum Beispiel einem Monitor, übertragen. Mit Hilfe eines derartigen Prüfgeräts können nur sehr geringe Reifengeschwindigkeiten gefahren werden, da nur ein sehr kleiner Streifen aufgrund des geringen Strahlungswinkels von 20 bis 40° durchstrahlt wird.

Ein ähnliches Reifenprüfgerät, jedoch mit einer Zwei-Fenster-Röhre und verstellbaren Bildaufnahmeorganen ist aus DE-B-2 231 792 bekannt.

Aus der US-A-3 934 144 ist eine Vorrichtung zur Röntgenprüfung von Kraftfahrzeugreifen bekannt geworden, bei der eine Röntgenröhre innerhalb des Reifens um annähernd 180° geschwenkt wird und dadurch nacheinander Reifenabschnitte eines Reifenquerschnitts durchstrahlt. Die vom Reifen ausgehende Strahlung wird auf Fluoreszenzschirme geleitet, denen Reihen von strahlungsempfindlichen Elementen zugeordnet sind. Die z.B. fotoelektrisch wirkenden Elemente werden einzeln oder zusammen mit Kontrollschaltungen so verbunden, daß bei einem Umlauf des Kraftfahrzeugreifens ein Ausgangssignal erzeugt wird, dessen Größe von der Intensität der auf den Fluoreszenzschirm auftreffenden Röntgenstrahlung abhängt. Bei einer lokalen und ausgeprägten Veränderung der Intensität wird ein Signal erzeugt, das zu einer Abweisung des Kraftfahrzeugreifens führt.

Aus "Elektronik", 17 vom 22.08.1986 Seiten 62-66 ist ein Bildaufnehmermodul bekannt, dessen Zeilen abgetastet werden und das zum Auffinden von Herstellungsfehlern in Reifen verwendet werden kann.

Der Erfindung liegt daher die Aufgabe zugrunde, eine Vorrichtung zur allseitigen Röntgenprüfung eines drehbar abgestützten Kraftfahrzeugreifens zu schaffen, die einfach aufgebaut ist, eine hohe Reifengeschwindigkeit und damit einen großen Durchsatz durch die Prüfvorrichtung erlaubt und die insbesondere für die Prüfung von Reifen mit Kunststoffcord geeignet ist.

Diese Aufgabe wird durch die Merkmale des Kennzeichnungsteils des Patentanspruchs 1 gelöst.

Bei der erfindungsgemäßen Vorrichtung wird eine Röntgenrundstrahlröhre verwendet. Röntgenrundstrahlröhren sind an sich bekannt. 'Sie haben in der einen Ebene einen Strahlungswinkel bis 300°. Senkrecht dazu weisen sie normalerweise einen Strahlungswinkel bis 40° auf. Bisherige Röntgenprüfvorrichtungen für Kraftfahrzeugreifen verwenden Röntgenstrahlröhren mit einem Strahlungskegelwinkel von 40°. Durch die Verwendung einer einzigen Röntgenstrahlröhre wird der Aufwand für die erfindungsgemäße Prüfvorrichtung gegenüber herkömmlichen Vorrichtungen erheblich reduziert. Ferner ermöglicht die erfindungsgemäße Prüfvorrichtung eine höhere Wirtschaftlichkeit, weil die Röntgenröhren bekanntlich Verschleißteile sind, die von Zeit zu Zeit ausgewechselt werden müssen.

Bei der erfindungsgemäßen Vorrichtung wird die Röntgenstrahlröhre nahe an der offenen Seite innerhalb des vom Reifen umfaßten Raums angeordnet, vorzugsweise sogar zumindest teilweise innerhalb des Reifens. Dadurch wird eine annähernd senkrechte Durchstrahlung aller zu prüfenden Reifenbereiche ermöglicht und damit eine verzerrungsfreie Darstellung auf der Wiedergabevorrichtung, beispielsweise dem Bildschirm.

Die erfindungsgemäße Vorrichtung verwendet darüber hinaus drei lineare Anordnungen lichtempfindlicher Dioden, die annähernd durchmesserparallel bzw. achsparallel angeordnet sind. Derartige Diodenanordnungen, auch Diodenzeilen genannt, sind ebenfalls an sich bekannt. Sie werden seriell abgetastet. Die abgetastete Zeile hat nur eine geringe Breite, beispielsweise von 0,5 mm. Die Ausgangssignale der Dioden gelangen in einen Speicher, von dem sie dann auf einen Bildschirm gegeben werden. Die Steuerung des Speichers ist derart, daß eine vorgegebene Anzahl von Zeilen auf dem Bildschirm gleichzeitig erscheint, wobei die einer vorgegebenen Abtastung entsprechenden Zeilen den Bildschirm sprungweise im Zeilenabstand von oben nach unten durchwandern. Auf diese Weise wird auf dem Bildschirm stets ein bestimmter Flächenabschnitt des zu prüfenden Reifenabschnitts abgebildet, wobei die Größe des Flächenabschnitts von der Abtastgeschwindigkeit und von der Drehgeschwindigkeit des Reifens abhängt.

Die Diodenanordnungen sind in ihrem Abstand zum Reifen verstellbar angeordnet. Mit Hilfe der verstellbaren Dioden kann ihr Abstand zur Außenseite der Reifenflanken bzw. der Reifenlauffläche gleichgehalten werden und damit auch der Abbildungsmaßstab. Für jede Reifengröße wird daher der gleiche Abbildungsmaßstab verwendet, was eine erhebliche Erleichterung für die Bedienungsperson darstellt.

Bei der erfindungsgemäßen Vorrichtung läßt sich die Röntgenquelle sehr nahe an die zu prüfenden Bereiche heranbringen. Sie kann daher mit einer geringen Leistung betrieben werden, was sich, wie oben bereits ausgeführt, günstig auf den zu erzielenden Kontrast zwischen Gummi und Kunststoff auswirkt. Ein weiterer Vorteil der erfindungsgemäßen Vorrichtung besteht darin, daß eine Verkleinerung der kompletten Röntgenanlage erhalten wird. Dadurch wird nicht nur der apparative Aufwand geringer, sondern auch eine Raumersparnis erreicht.

Die Geschwindigkeit, mit der der abgebildete Reifen an der betreffenden Diodenzeile entlangläuft, ist wegen der Linearität der Diodenzeile und der Kreisform des Reifens sowie wegen des Abstands des Reifens von der Diodenzeile nicht gleich der Umfangsgeschwindigkeit, sondern in jedem Fall größer. Daher wird der Abstand so klein wie möglich gewählt, und die Abtastfrequenz, die an die Umfangsgeschwindigkeit des Reifens angepaßt werden sollte, ist um einen Faktor zu korrigieren, der dem Abstand entspricht.

Die Umfangsgeschwindigkeit wird normalerweise durch die Bedienungsperson vorgegeben, sie hat es jedoch in der Hand, diese zu verändern, zum Beispiel zu verringern, um eine noch gründlichere Prüfung vorzunehmen. Falls keine entsprechenden Maßnahmen getroffen werden, würde sich der Abbildungsmaßstab ebenfalls ändern. Wird der erwähnte Abstand nicht klein genug gewählt und/oder differieren Umfangsgeschwindigkeit und Abtastfrequenz zu sehr, läßt sich eine einwandfreie Abbildung nicht erreichen. Die Erfindung sieht eine Geschwindigkeitsmeßvorrichtung vor, die die Umfangsgeschwindigkeit des Reifens mißt. Die Abtastgeschwindigkeit wird an die Umfangsgeschwindigkeit automatisch angepaßt. Die Umfangsgeschwindigkeit des Reifens ist entlang seinen Flanken naturgemäß abhängig vom Radius des betreffenden Flankenbereichs. Bezüglich der den Flanken zugeordneten Diodenanordnungen wird eine mittlere Umfangsgeschwindigkeit gewählt, um den gleichen Abbildungsmaßstab beizubehalten.

Aus der DE-OS 35 30 938 ist bekanntgeworden, zum Prüfen von Gepäck, zum Beispiel in Flughäfen, Diodenzeilen einzusetzen. Eine einzige Röntgenstrahlquelle, jedoch keine Rundstrahlröhre, durchleuchtet das Gepäck, wobei neben und über der Schleuse, durch die das Gepäck gefördert wird, eine Diodenzeile vorgesehen ist. Die Auflösung, die mit derartigen bekannten Diodenzeilen erreicht wird, ist für die Gepäckprüfung ausreichend, nicht jedoch für die Prüfung der Struktur von Kraftfahrzeugreifen. Nach einer Ausgestaltung der Erfindung beträgt die Dichte der Dioden in den erfindungsgemäßen Diodenanordnungen mindestens drei Dioden pro 2 mm Länge der Diodenanordnung. Die Dioden sind daher bei der erfindungsgemäßen Vorrichtung außerordentlich dicht gepackt. Außerdem wird eine sehr hohe Abtastgeschwindigkeit für die Reifen gewählt, mindestens 10 m/min. Mit einer derartigen Diodenanordnung und Abtastgeschwindigkeit wird eine Auflösung erhalten, mit der auch kleinste Fehler festgestellt werden können.

Zur Verstellung der Diodenanordnungen werden vorzugsweise Verstellantriebe verwendet, zum Beispiel Elektromotoren, die frequenzgesteuert sind. Auf diese Weise läßt sich eine sehr feine und erschütterungsfreie Verstellung der Diodenanordnungen bewerkstelligen. Zur Erzielung des stets gleichen Abstands der Diodenanordnungen vom zu prüfenden Reifen ist nach einer Ausgestaltung der Erfindung jeder Diodenanordnung ein Prüfpositionsfühler zugeordnet, der mit der Steuervorrichtung für die Verstellantriebe verbunden ist. Sobald der Positionsfühler ein Signal an die Steuervorrichtung abgibt, wird der zugeordnete Verstellantrieb abgeschaltet. Der Positionsfühler kann zum Beispiel von einer optischen Lichtschranke gebildet sein. Es können auch zwei Lichtschranken vorgesehen werden, um die Verstellgeschwindigkeit bei Erreichen der ersten Lichtschranke zu reduzieren und die Diodenanordnung anschließend mit Schleichgeschwindigkeit in die Endprüfposition zu bringen.

Die Dicke der zu prüfenden Reifen ist sehr unterschiedlich. Die auf die Dioden auftreffende Intensität der Röntgenstrahlung hängt jedoch von der Dicke der Reifen ab. Damit auf dem Bildwiedergabegerät eine annähernd gleiche Helligkeit erzielt wird, wird nach einer Ausgestaltung der Erfindung die Spannung der Röntgenröhre in Abhängigkeit von der Dicke geändert. Es ist nur schwer möglich, die Dicke des Reifens vorher zu messen. Die Breite und/oder der Durchmesser des Reifens geben jedoch Aufschluß über die Dicke, so daß es ausreicht, diese Werte zu messen und die Spannung an der Röntgenrundstrahlröhre in Abhängigkeit von diesen Werten zu ändern.

Das auf dem Bildwiedergabegerät erzeugte Bild der Reifen soll nach Möglichkeit die gleiche Helligkeit aufweisen. Hierbei ergeben sich jedoch einige Schwierigkeiten. Die lichtempfindlichen Dioden verändern mit der Zeit ihre Empfindlichkeit, und zwar individuell. Außerdem ergibt sich beim Verfahren der Diodenanordnungen zur Erreichung des vorgegebenen Abstands eine unterschiedliche Beaufschlagung der einzelnen Dioden mit Röntgenstrahlung, weil sich ihr Abstand zur Röntgenquelle ändert. Die Intensität der Strahlung der Rundstrahlröhre ist über ihren Strahlungswinkel keineswegs konstant.Daher ändert sich die Intensität der Bestrahlung einer Diode der Diodenanordnung auch mit der Änderung der Winkellage zur Röntgenröhre. Es ist daher notwendig, von Zeit zu Zeit eine entsprechende Kalibrierung vorzunehmen. Aufgrund ihrer unterschiedlichen Entfernung zur Röntgenquelle und der unterschiedlichen Dicke des durchstrahlten Materials (der Wulst eines Reifens ist besonders dick, während die Flanke nahe der Lauffläche relativ dünn ist) werden die Dioden mit unterschiedlicher Strahlungsintensität beaufschlagt. Entsprechend stellen sich die Werte für die Ausgangssignale der lichtempfindlichen Dioden ein. Um eine gleichmäßige Helligkeit auf dem Bildschirm zu erzielen, müssen jedoch die in den Speicher eingegebenen Signale annähernd gleiche Werte aufweisen. Diesem Zweck dient das erfindungsgemäße Kalibrierverfahren.

Bei diesem werden die der Lauffläche zugeordnete Diodenanordnung und die den Flanken zugeordneten Diodenanordnungen zeitlich nacheinander in eine vorgegebene Kalibrierposition gebracht, die sich von der Prüfposition deutlich unterscheidet. Zunächst wird zum Beispiel eine sogenannte Dunkelkalibrierung vorgenommen, bei der die Röntgenquelle ausgeschaltet ist. Sie dient nur dazu, alle lichtempfindlichen Dioden auf gleiche Empfindlichkeit einzustellen. Alternativ können die Ausgangssignale der Dioden so eingeregelt werden, daß annähernd gleiche Werte zum Speicher weitergegeben werden. Anschließend folgt die sogenannte Hellkalibrierung. Bei dieser wird zusätzlich zum Beispiel ein Materialstück vor die eingeschaltete Röntgenquelle gebracht, das annähernd dem Material des Reifens und dessen Dicke annähernd der Dicke des dünnsten Reifens entspricht. Wie erwähnt, ändert sich die Strahlungsintensität an den einzelnen Dioden, wenn die Diodenanordnungen verfahren werden. Das Verfahren ist zweckmäßig bzw. notwendig, um jeweils den gleichen Abstand vom Reifen einzustellen.Mit anderen Worten, der Abstand der Dioden von und ihre Winkelbeziehung zu der Röntgenquelle ändern sich mit der Größe eines Reifens. Im Grunde wäre es daher notwendig, die Dioden für jede Reifengröße bzw. jeden Abstand gesondert zu kalibrieren. Dies wäre mit einem hohen Aufwand verbunden.

Bei der Erfindung wurde erkannt, daß es für alle Diodenanordnungen eine Kalibrierposition gibt, die deutlich von den einzelnen Prüfpositionen abweicht und in der sich die Dioden einwandfrei kalibrieren lassen, wobei die Tatsache, daß Abstände und Winkellagen der Dioden sowie die Dicke des durchstrahlten Prüfmaterials die Ansprache der Dioden auf die auftreffende Röntgenstrahlung stark beeinflussen, hilft, die "Fehler" beim Kalibrieren zu kompensieren. So werden z.B. die Dioden, die in der Prüfposition über einen stärkeren Wandbereich des Reifens hindurch bestrahlt werden, in der Kalibrierposition schwächer bestrahlt und somit automatisch empfindlicher gemacht usw. Die Kalibrierposition ist also so gewählt, daß die einzelnen Dioden so mit Röntgenlicht bestrahlt werden, als würde ein Reifen durchstrahlt werden und die Dioden befänden sich in der Prüfposition.

Bei der herkömmlichen Prüfvorrichtung besteht das Problem, dünne und dicke Bereiche der Reifenwandung gleichmäßig hell und deutlich abzubilden. Ist die Strahlungsintensität groß, um dicke Bereiche gut abzubilden, werden die dünnen Bereiche überstrahlt und somit weniger gut sichtbar gemacht. Umgekehrt führt eine erste Abbildung der dünnen Bereiche zu einer zu schwachen Abbildung der dickeren Bereiche. Mit Hilfe des erfindungsgemäßen Kalibrierverfahrens lassen sich diese Probleme vermeiden. In der Kalibrierposition, in der die Diodenanordnungen einen deutlich größeren Abstand von der Röntgenquelle aufweisen als in den einzelnen Prüfpositionen, können die Dioden so kalibriert werden, daß in allen unterschiedlichen Prüfpositionen die Reifenwandung insgesamt gut durchleuchtet und abgebildet werden kann. Die geeignete Kalibrierposition für die Diodenanordnungen kann durch Versuche gefunden werden.

Mit Hilfe des Kalibrierverfahrens können die durch die unterschiedliche Dicke der Reifenwandung bedingten Helligkeitsunterschiede sowie die unterschiedlichen Abstände von der Röntgenquelle kompensiert werden, und der Betrachter sieht auf dem Bildschirm stets ein annähernd gleich helles und deutliches Bild.

Die Erfindung wird nachfolgend anhand von Zeichnungen näher erläutert.

Fig. 1 zeigt äußerst schematisch die erfindungsgemäße Prüfvorrichtung mit einer geschwindigkeitsabhängigen Abtaststeuerung.

Fig. 2 zeigt eine ähnliche Darstellung wie Fig. 1, die die Verstellung der Diodenanordnungen andeutet.

Fig. 3 zeigt äußerst schematisch einige Dioden einer Diodenanordnung sowie die Regelung ihrer Ausgangssignale.

Fig. 4 zeigt eine ähnliche Darstellung wie die Figuren 1 und 2 mit einer Steuerung der Spannung der Röntgenquelle.

Fig. 5 zeigt eine Einzelheit für die Prüfvorrichtung nach den Figuren 1, 2 und 4.

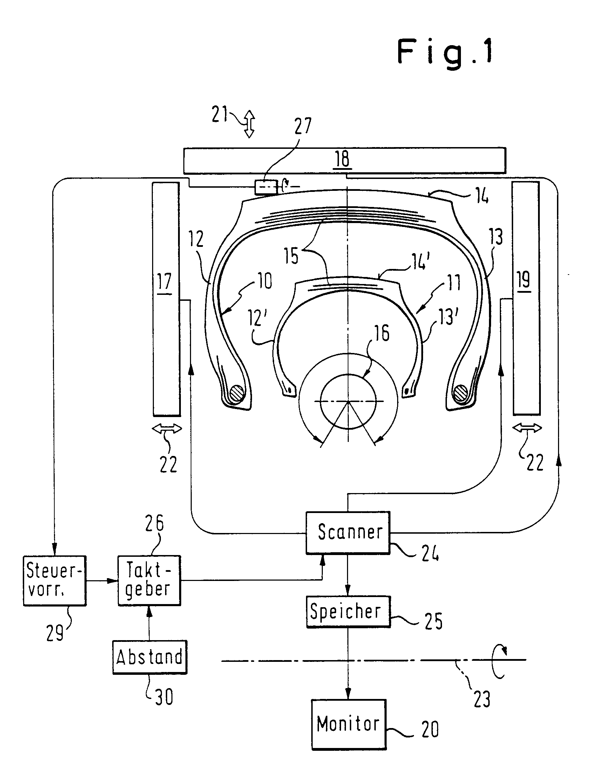

In Fig. 1 ist ein Schnitt durch zwei in der Größe unterschiedliche Reifen 10, 11 gezeigt. Ihre Flanken oder Seitenwände 12, 13 bzw. 12', 13' und ihre Lauffläche 14 bzw. 14' sind mit einem Kunststoffcord 15 versehen. Der Reifen 10 bzw. 11 ist um seine Achse in bekannter Weise drehbar abgestützt. Er wird mit Hilfe einer nicht gezeigten Drehvorrichtung um seine Achse 23 gedreht, die z.B. in einer vertikalen Ebene liegt, wobei die Umfangsgeschwindigkeit vom Bedienungsmann vorgegeben und geändert werden kann. Die entsprechenden konstruktiven Vorkehrungen hierfür sind nicht gezeigt; sie sind Stand der Technik. Auch die Schutzvorkehrungen bei Röntgenprüfvorrichtungen sind nicht gezeigt.

Man erkennt in Fig. 1, daß eine Röntgenrundstrahlröhre 16 am Eingang der Reifen 10 bzw. 11 angeordnet ist. In einer Radialebene zum Reifen (hier in der Zeichenebene) weist die Röntgenrundstrahlröhre 16 einen Strahlungswinkel von etwa 300° auf. In der radialen Ebene werden daher alle Bereiche des Reifens von der Strahlung der Röhre 16 durchstrahlt, und zwar annähernd in einem Durchstralwinkel von 90°. Es versteht sich, daß die Röntgenstrahlröhre 16 weiter in das Innere der Reifen 10 bzw. 11 verlegt sein kann, jedoch auch weiter außerhalb. In einer Ebene senkrecht zur Radialebene weist die Rundstrahlröntgenröhre 16 einen Strahlungswinkel von etwa 40° auf.

Auf der Außenseite der Außenwände 12, 13 bzw. 12', 13' und der Außenseite der Lauffläche 14, 14' sind Diodenanordnunggen 17, 18 und 19 vorgesehen. In Fig. 1 sind diese lediglich schematisch angedeutet. Jede Diodenanordnung 17 bis 19 enthält eine lineare Anordnung einzelner lichtempfindlicher Dioden, wobei die Diodenreihe der Anordnungen 17 und 19 annähernd parallel zum Durchmesser und die Reihe der Dioden der Anordnung 18 annähernd parallel zur Achse der Reifen verläuft. Die Dioden werden von einem Scanner 24 periodisch abgetastet, wobei die abgetasteten Signale in bekannter Weise im Speicher 25 so gespeichert werden, daß eine Reihe von Abtastungen gleichzeitig auf einer Wiedergabevorrichtung 20, beispielsweise einem Bildschirm, erscheint. Die Wiedergabevorrichtung 20 ist ebenfalls sehr schematisch angedeutet. Sie besteht aus drei einzelnen Bildschirmen (nicht gezeigt).

Die Abtastgeschwindigkeit des Scanners 24 wird von einem Taktgeber 26 vorgegeben. Der Lauffläche 14, 14' der Reifen 10, 11 ist ein Geschwindigkeitsfühler 27, z.B. eine Tachometerrolle, zugeordnet. Sein Ausgangssignal geht auf eine Steuervorrichtung 29, die ihrerseits mit dem Taktgeber 26 verbunden ist. Die Abtastgeschwindigkeit des Scanners 24 wird nach Maßgabe der Geschwindigkeit der Reifen 10, 11 variiert, um einen gleichen Abbildungsmaßstab bei vorgegebenem Abstand der Diodenanordnung 17 bis 19 vom Reifen zu erhalten. Für die Reifengeschwindigkeit der Flanken errechnet die Steuervorrichtung 26 einen Mittelwert. Die Abtastgeschwindigkeit für die Lauffläche 14, 14' einerseits und für die Flanken 12, 12' ist daher unterschiedlich. Ändert sich der Abstand, muß die Taktfrequenz ebenfalls geändert werden. Dies ist durch den Block 30 angedeutet.

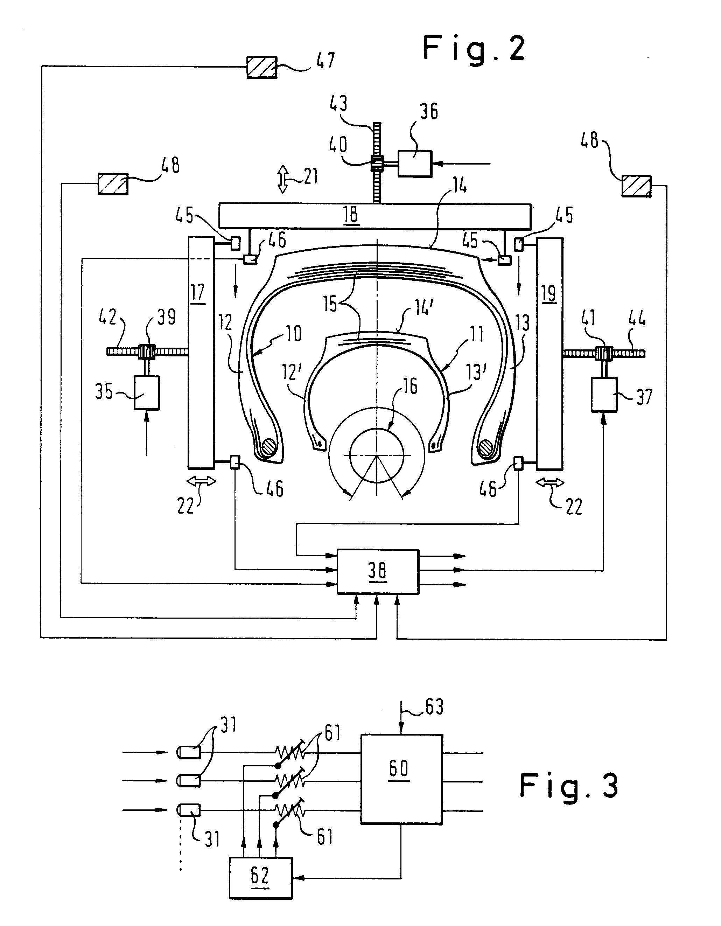

Die Dioden der Diodenanordnungen 17 bis 19 sind sehr dicht nebeneinander angeordnet. In Fig. 3 sind drei lichtempfindliche Dioden 31 dargestellt. Ihr Abstand beträgt zum Beispiel 0,4 bis 0,5 mm voneinander. Die Diodenanordnungen 17 bis 19 enthalten zum Beispiel 1024 Dioden. Der Bildschirm des Monitors 20 weist eine entsprechende Anzahl von Bildpunkten pro Zeile auf. Um eine möglichst gute Auflösung zu erhalten, wird eine hohe Abtastgeschwindigkeit gewählt, zum Beispiel mindestens 10 m/sec., vorzugsweise 1 Pixel pro sec.

Die Diodenanordnungen 17 bis 19 bilden ein U und sind gemeinsam an einem nicht gezeigten Bauteil gelagert, das in Richtung des Doppelpfeils 21 verstellbar im Maschinengestell (nicht gezeigt) gelagert ist. Die Diodenanordnungen 17 und 19 sind ihrerseits jeweils auf einem zweiten Bauteil (nicht gezeigt), das parallel zu sich selbst auf dem ersten Bauteil verstellbar gelagert ist, wie durch die Doppelpfeile 22 angedeutet. Die Diodenanordnung 18 kann ebenfalls in Längsrichtung verstellbar gemacht werden, um eine Zentrierung zu erreichen bzw. um eine sehr breite Lauffläche in zwei Umläufen zu prüfen, wobei bei jedem Umlauf jeweils die Hälfte geprüft wird. Damit läßt sich ein gleicher Abstand zur Außenseite des Reifens 10 bzw. 11 bzw. zur Lauffläche herstellen und ein einheitlicher Abbildungsmaßstab erreichen. Die Verstellvorrichtungen sind frequenzgesteuerte Elektromotoren 35, 36 und 37, die von einer Steuervorrichtung 38 gesteuert werden und die über Ritzel 39, 40, 41 auf eine Zahnstange 42, 43, 44 wirken, um die die Diodenanordnungen 17, 18 und 19 bzw. die zugehörigen Bauteile zu verstellen. Motor 36 verstellt das erste Bauteil und damit alle Diodenanordnungen 17, 18 und 19.

Unabhängig von der Reifengröße sollen die Diodenanordnungen 17 bis 19 den gleichen Abstand zum Reifen einnehmen. Zu diesem Zweck ist jede Diodenanordnung 17 bis 19 mit einer Lichtschrankenanordnung versehen bestehend aus einem Sender 45 und einem Empfänger 46. Die Empfänger 46 sind mit der Steuervorrichtung 38 verbunden. Wird bei einem Verfahren der Diodenanordnungen 17 bis 19 auf Reifen hin der Lichtstrahl zwischen Sender 45 und Empfänger 46 unterbrochen, wird ein entsprechendes Signal auf die Steuervorrichtung 38 gegeben, welche nunmehr die Antriebe 35 bis 27 stoppt.

In Fig. 2 sind außerdem Positionsfühler 47 und 48 gezeigt, die ebenfalls mit der Steuervorrichtung 38 verbunden sind. Sie dienen dazu, die Diodenanordnungen 17 bis 19 automatisch in eine Kalibrierposition zu fahren. Es versteht sich, daß die Positionsfühler 47, 48 auch den Zahnstangen 42, 43 oder 44 zugeordnet sein können (auf die Kalibrierung wird weiter unten noch eingegangen).

Den Diodenanordnungen 17 bis 19 ist eine nicht gezeigte Temperieranordnung zugeordnet, die die Dioden auf einer vorgegebenen Temperatur hält. Auf diese Weise können die zeitlichen Abstände, in denen ein Hell-Dunkel-Abgleich für die Dioden vorgenommen werden muß, vergrößert werden. Dies bewirkt somit günstigere Taktzeiten.

Den Diodenanordnungen 17 bis 19 können auch schlitzartige Blenden, z.B. aus Blei, zugeordnet werden (nicht gezeigt). Sie halten die aus dem Raum kommende Streustrahlung ab und verhindern, daß die elektronischen Bauteile durch Röntgenstrahlen negativ beeinflußt werden.

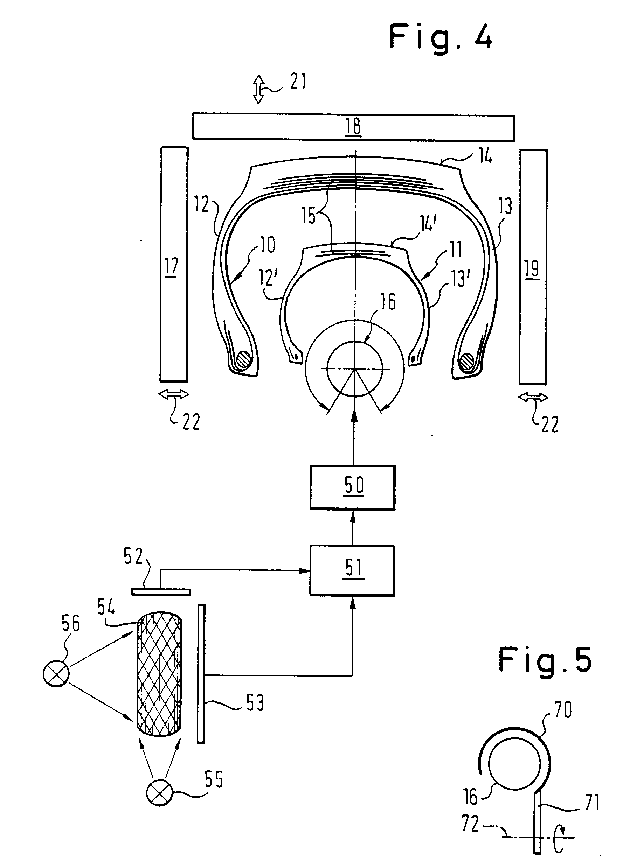

Fig. 4 zeigt die Diodenanordnungen 17 bis 19 nach den Figuren 1 und 2, nicht jedoch deren Verstellantriebe. Die Röntgenrundstrahlröhre 16 ist mit einer Steuerschaltung 50 verbunden, welche die Spannung der Röhre 16 ändert. Die Steuerschaltung 50 wird ihrerseits von einer Steuervorrichtung 51 angesteuert, die mit optischen Meßvorrichtungen 52 und 53 verbunden ist. Die Meßvorrichtungen 52, 53 können ebenfalls von Zeilen lichtempfindlicher Dioden gebildet sein. Sie dienen dazu, einen Reifen 54 im Hinblick auf seine Breite und seinem Durchmesser zu messen. Entsprechend sind den Meßvorrichtungen 52, 53 eine Lichtquelle 55 bzw. 56 zugeordnet. Breite und Durchmesser eines Reifens geben Aufschluß über die Dicke seiner Wandung. Entsprechend wird die Spannung der Röhre 16 verstellt, d.h. bei einem größeren Durchmesser bzw. einer größeren Breite wird die Spannung erhöht und bei einem niedrigeren Durchmesser bzw. einer niedrigeren Breite wird die Spannung erniedrigt.

Damit der Betrachter auf dem Bildschirm eine annähernd gleiche Helligkeit vorfindet, ist es notwendig, die von den die Empfindlichkeit der Dioden 31 bzw. die Größe der von den Dioden kommenden Signale zu modifizieren. Zu diesem Zweck sind z.B. die Ausgangsleitungen der Dioden 31 mit einer Regelvorrichtung 60 verbunden. In den Leitungen zwischen den Dioden 31 und der Regelvorrichtung 60 ist ein Stellglied 61 angeordnet zur Veränderung des Ausgangssignals bzw. der Empfindlichkeit der Dioden 31. Die Stellglieder 61 werden von der Steuervorrichtung 62 gesteuert. Die Regelvorrichtung 60 sorgt mithin dafür, daß die auf den Speicher 25 gelangenden Signale (Fig. 1) annähernd die gleiche Größe aufweisen Natürlich müssen die Kontraste, die sich durch die Reifenstruktur ergeben, sichtbar gemacht werden. Aber die Ausleuchtung in der Abbildung soll für alle Reifenpartien annähernd gleich sein. Die Regelvorrichtung 60 wird jedoch nur in Betrieb gesetzt, wenn eine Kalibrierung stattfindet. Dies ist durch den Eingangspfeil 63 angedeutet. Bei einer Kalibrierung befindet sich kein Reifen zwischen den Diodenanordnungen 17 bis 19. Die Steuervorrichtung 38 verstellt die Diodenanordnungen 17 bis 19 über die Antriebe 35 bis 37 in die Kalibrierposition, und zwar zunächst die Diodenanordnung 18 in ihre Kalibrierposition, die durch den Positionsfühler 47 automatisch vorgegeben wird. Der Positionsfühler 48 gibt automatisch die Stellung der Diodenanordnungen 17 und 19 vor, wenn diese kalibriert werden. Hierbei ist wesentlich die relative Lage der Diodenanordnungen 17 bis im Hinblick auf die Röntgenröhre 16. Die Diodenanordnungen werden daher in eine Position verfahren, die sie normalerweise relativ zur Röntgenröhre 16 beim Prüfbetrieb nicht einnehmen. In der Kalibrierposition haben z.B. diejenigen Dioden, die im Prüfbetrieb wegen ihrer Lage z.B. mit starker Röntgenstrahlung bestrahlt werden würden, weil sie über einen dünneren Wandbereich des Reifens die Strahlung erhalten, einen relativ geringen Abstand von der Röntgenquelle bzw. eine günstige Winkellage, so daß sie mit relativ hoher Intensität bestrahlt werden. Eine Einregelung auf gleiche Empfindlichkeit bewirkt, daß diese Dioden daher weniger empfindlich gemacht werden. Es wird also eine Situation simuliert, wie sie im Prüfbetrieb vorkommt, d.h. eine Beaufschlagung der Dioden mit Röntgenstrahlung, die abhängig von der Entfernung der Dioden zur Röntgenquelle und dem zu durchstrahlenden Material unterschiedlich ist. Unabhängig von der beschriebenen Kalibrierpositionen kann zunächst eine Dunkelkalibrierung vorgenommen werden. Diese dient nur dazu, alle Dioden zunächst gleich empfindlich zu machen. Dies geschieht z.B. bei ausgeschalteter Röhre 16. Mit Hilfe der in Fig. 3 gezeigten Regelvorrichtung 60 werden die Ausgangssignale der Dioden 31 auf gleiche Empfindlichkeit geregelt. Auf diese Weise ist es möglich, die sich ändernden individuellen Empfindlichkeiten der Dioden 31 zu kompensieren. Bei der Hellkalibrierung wird, wie in Fig. 5 dargestellt, ein ringförmiges Teil 70 vor die Röntgenröhre 16 gebracht. Das Teil 70 ist an einem Arm 71 angebracht, der um eine Achse 72 mit Hilfe einer nicht gezeigten Verstellvorrichtung verschwenkbar ist. Das Teil besteht aus dem gleichen Material wie die Reifen 10, 11 und hat eine Dicke, die der Dicke des dünnsten zu prüfenden Reifens entspricht. Die Röntgenstrahlung 16 tritt daher zunächst durch das Prüfteil 70, bevor sie auf die Dioden der Diodenanordnungen 17 bis 19 trifft. Mit Hilfe der beschriebenen Kalibriervorgänge wird daher eine annähernd gleiche Helligkeit auf dem Bildschirm des Monitors 20 erhalten (Fig. 1).

**Patentansprüche**

1. Vorrichtung zur allseitigen Röntgenprüfung eines drehbar abgestützen Kraftfahrzeugreifens während einer Reifenumdrehung, mit einer Röntgenrundstrahlröhre (16), die in dem vom Reifen (10, 11) umschlossenen Raum nahe seiner offenen Innenseite so angeordnet ist, daß die von ihr ausgehende Strahlung die Außenwände (12, 13, 12', 13') und die Reifenlauffläche (14, 14') von innen nach außen durchstrahlt und mit drei außerhalb des Reifens angeordneten, den Außenseiten und der Reifenlauffläche zugeordneten Empfangsvorrichtungen für die von den durchstrahlten Reifenabschnitten ausgehenden Strahlung, die ihrerseits mit einer optischen Wiedergabevorrichtung verbunden sind, dadurch gekennzeichnet, daß die drei Empfangsvorrichtungen von drei linearen Anordnungen (17, 18, 19) lichtempfindlicher Dioden (31) gebildet sind, die annähernd durchmesserparallel bzw. achsparallel angeordnet sind, den Diodenanordnungen (17, 18, 19) eine Abtasteinrichtung (24) zugeordnet ist, die die Dioden (31) mit einer vorgegebenen Abtastfrequenz abtastet und die die Ausgangssignale der Dioden (31) auf einen Speicher (25) gibt und eine aus einzelnen Bildpunkten bestehende Bildwiedergabevorrichtung (20) vorgesehen ist zur Erzeugung jeweils einer Bildzeile pro Abtastsequenz für eine Diodenordnung (17, 18, 19), die Diodenanordnungen (17, 18, 19) in ihrem Abstand zum Reifen (10, 11) verstellbar angeordnet sind, die Abtastgeschwindigkeit der Abtasteinrichtung (24) veränderbar ist, eine Geschwindigkeitsmeßvorrichtung (27, 28) vorgesehen ist, die die Umfangsgeschwindigkeit des Reifens (10, 11) mißt und die Abtastgeschwindigkeit des Reifens in Abhängigkeit von der gemessenen Umfangsgeschwindigkeit verändert wird.

2. Vorrichtung nach Anspruch 1, dadurch gekennzeichnet, daß die Röntgenrundstrahlröhre (16) zumindest teilweise innerhalb des Reifens (10, 11) angeordnet ist.

3. Vorrichtung nach Anspruch 1 oder 2, dadurch gekennzeichnet, daß die Diodenanordnungen (17 bis 19) auf einem mit einem Verstellantrieb gekoppelten Bauteil angebracht sind, das entlang seiner annähernd rechtwinklig zur Lauffläche (14, 14') verlaufenden Achse verstellbar ist, und die den Reifenflanken zugeordneten Diodenanordnungen (17, 19) jeweils auf einem zweiten mit einem Verstellantrieb gekoppelten zweiten Bauteil angeordnet sind, die entlang einer senkrecht zur ersten Achse verlaufenden zweiten Achse am ersten Bauteil verstellbar gelagert sind.

4. Vorrichtung nach einem der Ansprüche 1 bis 3, dadurch gekennzeichnet, daß eine Temperiereinrichtung den Diodenanordnungen (17, bis 19) zugeordnet ist, die die Dioden auf einer vorgegebenen Temperatur hält.

5. Vorrichtung nach einem der Ansprüche 1 bis 4, dadurch gekennzeichnet, daß den Diodenanordnungen eine schlitzförmige Blende, vorzugsweise aus Blei, zugeordnet ist.

6. Vorrichtung nach einem der Ansprüche 1 bis 5, dadurch gekennzeichnet, daß die Dichte der Dioden (31) in den Diodenanordnungen (17 bis 19) mindestens drei Dioden pro 2 mm Länge beträgt.

7. Vorrichtung nach einem der Ansprüche 1 bis 6, dadurch gekennzeichnet, daß die Abtasteinrichtung (24) die Dioden (31) mit einer Abtastgeschwindigkeit von mindestens 10 m/sec. abtastet, vorzugsweise mit 1 Pixel pro sec.

8. Vorrichtung nach einem der Ansprüche 1 bis 7, dadurch gekennzeichnet, daß eine Eingabevorrichtung (30) vorgesehen ist, die ein dem Abstand der Diodenanordnungen (17 bis 19) entsprechendes Abstand-Signal erzeugt.

9. Vorrichtung nach einem der Ansprüche 1 bis 8, dadurch gekennzeichnet, daß Verstellantrieben (35, 36, 37) für die Diodenanordnungen (17 bis 19) eine Steuervorrichtung (38) zugeordnet ist und jeder Diodenanordnung (17 bis 19) ein Prüfpositionsfühler (45, 46) zugeordnet ist und die Steuervorrichtung (38) zur automatischen Positionierung der Diodenanordnungen ein Abschaltsignal auf die Verstellantriebe (35 bis 37) gibt, wenn die zugeordnete Diodenanordnung einen vorgegebenen Abstand von der Außenseite des Reifens (10, 11) erreicht.

10. Vorrichtung nach einem der Ansprüche 1 bis 9, dadurch gekennzeichnet, daß im Abstand zur Prüfvorrichtung eine Abmessung-Meßvorrichtung (52, 53) angeordnet ist, die die Breite und/oder den Durchmesser eines zu prüfenden Reifens mißt, die Röntgenrundstrahlröhre (16) mit einer Spannungssteuervorrichtung (50) verbunden ist und die Abmessungssignale auf die Spannungssteuervorrichtung (50) gegeben werden zur Änderung der Spannung in Abhängigkeit von der Größe der Abmessungssignale.

11. Vorrichtung nach einem der Ansprüche 3 bis 10, dadurch gekennzeichnet, daß die Verstellantriebe frequenzgesteuerte Elektromotoren (35, bis 37) oder Gleichstrommotoren aufweisen.

12. Vorrichtung nach einem der Ansprüche 1 bis 11, dadurch gekennzeichnet, daß ein eine Absorption bewirkendes Kalibrierteil, dessen Material annähernd dem der Reifen entspricht und das in seiner Dicke der Dicke des dünnsten Reifens entspricht, vorgesehen ist, das mit Hilfe einer Verstellvorrichtung wahlweise in eine Position zwischen Röntgenrundstrahlröhre (16) und der Diodenanordnung (17 bis 19) oder in eine Ruhestellung bringbar ist.

13. Vorrichtung nach Anspruch 12, dadurch gekennzeichnet, daß ein als Kalibrierteil wirkendes Abschirmteil (70) der Röntgenrundstrahlröhre (16) zugeordnet ist.

14. Vorrichtung nach einem der Ansprüche 9 bis 12, dadurch gekennzeichnet, daß den Diodenanordnungen (17 bis 19) zweite Positionsfühler (47, 48) zugeordnet sind, die mit der Steuervorrichtung (38) verbunden sind und die Steuervorrichtung (38) ein Abschaltsignal für die Verstellantriebe (35 bis 37) erzeugt, wenn die Diodenanordnungen (17 bis 19) ihre Kalibrierpositionen erreicht haben.

15. Verfahren zum Kalibrieren der Vorrichtung nach Anspruch 9 und 12, dadurch gekennzeichnet, daß die der Lauffläche der Reifen zugeordnete Diodenanordnung und die den Flanken der Reifen zugeordnete Diodenanordnungen zeitlich nacheinander in eine vorgegebene von den verschiedenen Prüfpositionen stark abweichende Kalibrierposition relativ zur Röntgenrundstrahlröhre gebracht werden, die Dioden der Diodenanordnung mit der Röntgenstrahlung über das Kalibrierteil bestrahlt werden und die Dioden in ihrer Empfindlichkeit so geregelt werden, daß sie unabhängig vom Abstand zur Röntgenröhre bzw. von ihrer Winkelbeziehung zur Röntgenröhre ein annähernd gleiches Ausgangssignal ergeben, wobei die Kalibrierpositionen so gewählt sind, daß die Strahlung so auf die Diodenanordnungen auftrifft als ob letztere und ein Reifen sich in der Prüfposition befinden würden.

## Claims

1. Device for the omnidirectional examination of a vehicle tyre by X-rays during one rotation of the rotatably supported tyre, comprising an omnidirectional X-ray tube (16) which is such located in the space encircled by the tyre (10, 11) close to the open inner side of the tyre that the radiation emanating from the X-ray tube penetrates the side walls (12, 13, 12', 13') and the tyre tread (14, 14') from inside outward, and three receiving means located outside the tyre and associated with the side walls and the tyre tread, for receiving the radiation emanating from the penetrated tyre portions, with the receiving means being connected to optical indication means, characterized in that the three receiving means are defined by three linear diode arrangements (17, 18, 19) of light-sensitive diodes (31) being arranged approximately parallel to the diameter of the tyre and parallel to the axis thereof, respectively, scanning means (24) associated with the diode arrangements (17, 18, 19) scan the diodes (31) with a predetermined scanning frequency and transmit the output signals of the diodes (31) to a memory (25), and image generating means having a plurality of picture elements for the generation of an image line per scanning sequence for a diode arrangement (17, 18, 19), the diode arrangements (17, 18, 19) are displaceably arranged with respect to their distance from the tyre (10, 11), the scanning speed of the scanning means (24) can be changed, speed-sensing means (27, 28) are provided to sense the circumferential speed of the tyre (10, 11), and the scanning speed of the tyre is varied in response to the sensed circumferential speed.

2. Device according to claim 1, characterized in that the omnidirectional X-ray tube (16) is at least partially located within the tyre (10, 11).

3. Device according to claim 1 or 2, characterized in that the diode arrangements (17 to 19) are located on a support member coupled with driving means, the support member being displaceable along its axis which is approximately rectangular with respect to the tyre tread (14, 14'), and the diode arrangements (17, 19) associated with the tyre side walls each are located on a second support member coupled with driving means, the second support member being displaceably supported on the first member along a second axis which vertically extends to the first axis.

4. Device according to one of the claims 1 to 3, characterized in that temperature-regulating means are associated with the diode arrangements (17 to 19) to maintain the diodes at a predetermined temperature.

5. Device according to one of the claims 1 to 4, characterized in that a slot-like diaphragm, preferably of lead, is associated with the diode arrangements.

6. Device according to one of the claims 1 to 5, characterized in that at least three diodes per 2 mm length are arranged in the diode arrangements (17 to 19).

7. Device according to one of the claims 1 to 6, characterized in that scanning means (24) scan the diodes (31) with a scanning speed of at least 10 m/sec., preferably with 1 pixel per second.

8. Device according to one of the claims 1 to 7, characterized in that input means (30) are provided which generate a distance signal corresponding to the distance of the diode arrangements (17 to 19).

9. Device according to one of the claims 1 to 8, characterized in that a control device (38) is associated with driving means (35, 36, 37) for the diode arrangements (17 to 19), a test position sensor (45, 46) is associated with each of the diode arrangements (17 to 19), and the control device (38) for automatic positioning of the diode arrangements transmits a switch-off signal to the driving means (35 to 37) when the associated diode arrangement has a predetermined distance from the outer side of the tyre (10, 11).

10. Device according to one of the claims 1 to 9, characterized in that a size measuring device (52, 53) is located spaced to the testing device to measure the width and/or the diameter of a tyre to be tested, voltage control means (50) are connected with the omnidirectional X-ray tube (16), and the size signals are transmitted to the voltage control means (50) for changing the voltage in response to the values of the size signals.

11. Device according to one of the claims 3 to 10, characterized in that the driving means include frequency-controlled electrical motors (35 to 37) or DC motors.

12. Device according to one of the claims 1 to 11, characterized in that a calibrating member effecting an absorption is provided which is adapted to be brought selectively in a position between the omnidirectional X-ray tube (16) and the diode arrangements (17 to 19) or in a rest position with the aid of driving means, with the material of the calibrating member being approximately identical with that of the tyres and the thickness of the material corresponding to the thickness of the thinnest tyre.

13. Device according to claim 12, characterized in that a test member (70) acting as a calibrating member is associated with the omnidirectional X-ray tube (16).

14. Device according to one of the claims 9 to 12, characterized in that second position sensors (47, 48) are associated with the diode arrangements (17 to 19), each sensor being connected to the control device (38) and the control device (38) generating a switch-off signal for the driving means (35 to 37) when the diode arrangements (17 to 19) reaching their calibration positions.

15. Method for calibrating the device according to claim 9 and 12, characterized in that the diode arrangement associated with the tread of the tyres and the diode arrangements associated with the side walls of the tyres are in succession displaced relative to the omnidirectional X-ray tube to a predetermined calibrating position which is different from the various testing positions, the diodes of the diode arrangement are illuminated by the X-rays through the calibrating member and the diodes are such adjusted with respect to their sensitivity that they generate approximately identical output signals independent from the distance to the X-ray tube and from their angular relation to the X-ray tube, respectively, with the calibrating position being selected such that the radiation impinging on the diode arrangements as if a tyre would be at the testing position.

**Revendications**

1. Dispositif pour l'examen radiographique omnidirectionnel d'un pneumatique de véhicule supporté de manière à pouvoir tourner, pendant une rotation de ce pneumatique, et comportant un tube à rayons X à rayonnement circulaire (16), qui est disposé dans l'espace entouré par le pneumatique (10, 11), à proximité de la face intérieure ouverte du pneumatique, de telle sorte que le rayonnement, qu'il émet, traverse de l'intérieur vers l'extérieur les parois extérieures (12, 13, 12', 13') et la surface de roulement (14, 14') du pneumatique, et comportant trois dispositifs de réception, qui sont disposés à l'extérieur du pneumatique, sont associés aux faces extérieures et à la surface de roulement du pneumatique, servent à recevoir le rayonnement émis par les sections irradiées du pneumatique et sont raccordés pour leur part à un dispositif de reproduction optique, caractérisé en ce que les trois dispositifs de réception sont formés par trois dispositifs linéaires (17, 18, 19) de diodes photosensibles (31), qui sont disposées de manière à être approximativement parallèles à un diamètre ou à l'axe, qu'aux dispositifs à diode (17, 18, 19) est associé un dispositif d'exploration par balayage (24), qui explore les diodes (31) avec une fréquence de balayage prédéterminée et envoie les signaux de sortie des diodes (31) à une mémoire (25) et qu'il est prévu un dispositif de reproduction d'images (20), qui est constitué par des points d'image individuels et sert à produire respectivement une ligne d'image lors de chaque séquence de balayage pour un dispositif à diodes (17, 18, 19), les dispositifs à diodes (17, 18, 19) étant disposés de manière que leurs distance au pneumatique (10, 11) soit réglable, et que la vitesse de balayage du dispositif d'exploration par balayage (24) est modifiable, qu'il est prévu un dispositif (27, 28) de mesure de la vitesse, qui mesure la vitesse tangentielle du pneumatique (10, 11) et que la vitesse de balayage du pneumatique est modifiée en fonction de la vitesse tangentielle mesurée.

2. Dispositif selon la revendication 1, caractérisé en ce que le tube à rayons X à rayonnement circulaire (16) est disposé au moins en partie à l'intérieur du pneumatique (10, 11).

3. Dispositif selon la revendication 1 ou 2, caractérisé en ce que les dispositifs à diodes (17 à 19) sont disposés sur un composant qui est accouplé à un dispositif d'entraînement, et qui est déplaçable le long de son axe approximativement perpendiculaire à la surface de roulement (14, 14'), et que les dispositifs à diodes (17, 19), associés aux flancs du pneumatique, sont disposés respectivement sur des seconds composants, qui sont accouplés à un dispositif d'entraînement et sont montés de manière à être déplaçables sur le premier composant le long d'un second axe perpendiculaire au premier axe.

4. Dispositif selon l'une des revendications 1 à 3, caractérisé en ce qu'un dispositif de mise en température est associé aux dispositifs à diodes (17 à 19), de manière à maintenir les diodes à une température prédéterminée.

5. Dispositif selon l'une des revendications 1 à 4, caractérisé en ce qu'un diaphragme à fentes, de préférence en plomb, est associé aux dispositifs à diodes.

6. Dispositif selon l'une des revendications 1 à 5, caractérisé en ce que la densité d'entassement des diodes (31) dans les dispositifs à diodes (17 à 19) correspond au moins à trois diodes pour une longueur de 2 mm.

7. Dispositif selon l'une des revendications 1 à 6, caractérisé en ce que le dispositif d'exploration par balayage (24) balaye les diodes (31) avec une vitesse de balayage égale à au moins 10 m/s, de préférence à raison de 1 pixel par seconde.

8. Dispositif selon l'une des revendications 1 à 7, caractérisé en ce qu'il est prévu un dispositif d'insertion (30), qui produit un signal de distance correspondant à la distance des dispositifs à diodes (17 à 19).

9. Dispositif selon l'une des revendications 1 à 8, caractérisé en ce qu'un dispositif de commande (38) est associé aux dispositifs d'entraînement (35, 36, 37) pour les dispositifs à diodes (17 à 19), qu'un capteur de position de contrôle (45, 46) est associé à chaque dispositif à diodes (17 à 19) et que le dispositif de commande (38) envoie, pour le positionnement automatique des dispositifs à diodes, un signal d'interruption aux dispositifs d'entraînement (35 à 37), lorsque le dispositif à diodes associé atteint une distance prédéterminée par rapport à la face extérieure du pneumatique (10, 11).

10. Dispositif selon l'une des revendications 1 à 9, caractérisé en ce qu'à distance du dispositif de contrôle est disposé un dispositif de mesure de dimensions (52, 53), qui mesure la largeur et/ou le diamètre d'un pneumatique devant être contrôlé, que le tube à rayons X (16) est raccordé à un dispositif (50) de commande de la tension et que les signaux de mesure sont envoyés au dispositif de commande de tension (50) pour modifier la tension en fonction de la valeur des signaux de dimensions.

11. Dispositif selon l'une des revendications 3 à 10, caractérisé en ce que les dispositifs d'entraînement comportent des moteurs électriques (35 à 37), dont la fréquence est commandée, ou des moteurs à courant continu.

12. Dispositif selon l'une des revendications 1 à 11, caractérisé en ce qu'il est prévu une pièce de calibrage, qui réalise une absorption, dont le matériau correspond approximativement à celui du pneumatique et dont l'épaisseur correspond à celle du pneumatique le plus mince, et qui peut être amené au choix, à l'aide d'un dispositif de déplacement, dans une position située entre le tube à rayons X (16) et le dispositif à diodes (17 à 19) ou dans une position de repos.

13. Dispositif selon la revendication 12, caractérisé en ce qu'une pièce de blindage (70), qui est utilisée en tant que pièce de calibrage, est associée au tube à rayons X (16).

14. Dispositif selon l'une des revendications 9 à 12, caractérisé en ce qu'aux dispositifs à diodes (17 à 19) sont associés deux capteurs de position (47, 48), qui sont reliés au dispositif de commande (38), et que ce dispositif de commande (38) produit un signal d'interruption pour les dispositifs d'entraînement (35 à 37) lorsque les dispositifs à diodes (17 à 19) ont atteint leurs positions de calibrage.

15. Procédé pour calibrer le dispositif selon les revendications 9 à 12, caractérisé en ce que le dispositif à diodes associé à la surface de roulement du pneumatique et les dispositifs à diodes associés aux flancs du pneumatique sont amenés latéralement, successivement, dans une position de calibrage prédéterminée, qui s'écarte fortement des différentes positions de contrôle, par rapport au tube à rayons X à rayonnement circulaire, que les diodes du dispositif à diodes sont irradiées par les rayons X à travers la pièce de calibrage, et que la sensibilité des diodes est réglée de telle sorte qu'elle fournisse un signal de sortie approximativement identique indépendamment de leur distance ou de leur relation angulaire par rapport au tube à rayons X, les positions de calibrage étant choisies de telle sorte que le rayonnement tombe sur les dispositifs à diodes comme si ces derniers et un pneumatique étaient situés dans la position de contrôle.

# Fig.1

# Fig.2

# Fig.3

# Fig. 4

# Fig.5